# EUROPÄISCHE PATENTSCHRIFT

(11) **EP 2 761 140 B1**
(45) Veröffentlichungstag und Bekanntmachung des Hinweises auf die Patenterteilung: **07.07.2021**
(21) Anmeldenummer: 12768727.5
(22) Anmeldetag: 28.09.2012
(51) Int. Cl.: G01N 21/954, F01D 21/00, G02B 23/24, G03B 37/00

(54) **ENDOSKOPIESYSTEM UND KORRESPONDIERENDES VERFAHREN ZUR UNTERSUCHUNG VON GASTURBINEN**
ENDOSCOPY SYSTEM AND CORRESPONDING METHOD FOR EXAMINING GAS TURBINES
SYSTÈME ENDOSCOPIQUE ET PROCÉDÉ ASSOCIÉ DE CONTRÔLE DE TURBINES À GAZ

(30) Priorität: 30.09.2011 DE 102011114541
(43) Veröffentlichungstag der Anmeldung: 06.08.2014
(73) Patentinhaber: Lufthansa Technik AG, 22335 Hamburg (DE)
(72) Erfinder: MÜLLER, Wolf, 24568 Kaltenkirchen (DE); THIES, Michael, 22339 Hamburg (DE); HÖRLYK, Carsten, 22926 Ahrensburg (DE)
(74) Vertreter: Müller Verweyen
(86) Internationale Anmeldenummer: PCT/EP2012/004089
(87) Internationale Veröffentlichungsnummer: WO 2013/045108

(56) Entgegenhaltungen:
- EP-A2- 1 408 201
- JP-A- 2005 077 832
- JP-A- 2008 225 012
- US-A- 6 009 189
- US-A- 6 063 023
- US-A1- 2005 199 832
- US-A1- 2006 078 193

## Beschreibung

Die Erfindung betrifft ein Endoskopiesystem mit den Merkmalen des Oberbegriffs von Anspruch 1. Weiterhin betrifft die Erfindung ein korrespondierendes Verfahren zum Betrieb eines Endoskopiesystems zur Untersuchung von Gasturbinen.

Endoskopiesysteme, häufig auch als Boroskopiesysteme bezeichnet, werden zur Untersuchung von Gasturbinen im Bereich Wartung und Instandhaltung, sowie bei Untersuchungen zur Lufttüchtigkeit von Gasturbinen eingesetzt. Die bekannten Endoskopiesysteme werden durch einen menschlichen Bediener gesteuert und weisen eine große Abhängigkeit von subjektiven Faktoren des Bedieners auf. Die bekannten Endoskopiesysteme verursachen lange Prüfzeiten bei der Untersuchung einer Gasturbine und bei der Dokumentation der Ergebnisse. Im Folgenden wird der Begriff "Endoskop" als Synonym zu der Bezeichnung "Boroskop" verwendet.

Die Druckschrift JP 2005 077832 A offenbart ein Endoskopiesystem, das beispielsweise für die Inspektion eines Flugzeugtriebwerks geeignet ist. Das Endoskop kann durch eine dafür vorgesehene Öffnung in das Triebwerk eingeführt werden, um dort beispielsweise eine Gasturbinenschaufel zu inspizieren. Zur Überprüfung der Position des Endoskops wird ein von dem Endoskop aufgenommenes Live-Bild mit einem virtuellen Bild eines Computermodells verglichen.

In der Druckschrift US 2006/0078193 A1 wird ein Verfahren zur visuellen Inspektion von Gasturbinenschaufeln vorgeschlagen. Gemäß der Erfindung wird die Inspektion in einem vordefinierten Betriebszustand der Gasturbine durchgeführt, wobei bestimmte Parameter der Gasturbine, beispielsweise die Drehzahl, zur Bestimmung des Betriebszustandes genutzt werden können.

Aus der US 2005/0199832 A1 ist eine Inspektionseinrichtung bekannt, bei der durch einen Sensor der Drehwinkel einer Gasturbinenschaufel ermittelt wird. Unter Verwendung des Drehwinkels wird ein Positionssignal generiert, das zur Ansteuerung einer Kamera verwendet wird, wenn sich die gewünschte Gasturbinenschaufel in einer für eine Kameraaufnahme geeigneten Position befindet.

Aus der JP 2008 225012 ist ein Endoskopiesystem zur visuellen Inspektion einer Gasturbine bekannt. Es umfasst eine Videosonde, die über einen Träger im Inneren der Gasturbine positioniert wird. Der Träger umfasst ferner einen Mechanismus, über den die Ausrichtung der Videosonde einstellbar ist.

Die Aufgabe der Erfindung ist es, ein Endoskopiesystem und korrespondierendes Verfahren anzugeben, die eine hohe Reproduzierbarkeit der Untersuchungsergebnisse und kurze Prüfzeiten bei erhöhter Prüfqualität bei der Untersuchung von Gasturbinen ermöglichen.

Die Erfindung löst diese Aufgabe mit den Merkmalen der unabhängigen Ansprüche.

Erfindungsgemäß ist das Endoskopiesystem dazu eingerichtet, das in eine Gasturbine eingebrachte Endoskop mit der Bildaufnahmeeinrichtung in der Gasturbine definiert zu positionieren und auszurichten.

Die definierte Positionierung und Ausrichtung durch das Endoskopiesystem ist erfindungsgemäß besonders vorteilhaft, weil dadurch eine Standardisierung von Bildaufnahmen bestimmter Teile und/oder Bereiche im Inneren der Gasturbine erreicht werden kann. Die Bildaufnahmen von verschiedenen Untersuchungen einer Gasturbine werden auf diese Weise direkt vergleichbar.

Erfindungsgemäß weist das Endoskopiesystem eine elektronisch gesteuerte Positioniervorrichtung zum definierten Positionieren und/oder Ausrichten des Endoskops in der Gasturbine auf. Dadurch ist keine manuelle Bewegung des Endoskops mehr notwendig. Die Positionierung und Ausrichtung kann über die Datenverarbeitungseinrichtung gesteuert werden, so dass die Positionierung besonders effizient und schnell erfolgen kann.

Weiterhin ist das Endoskopiesystem erfindungsgemäß zum automatischen Ermitteln der Position und/oder der Ausrichtung des Endoskops in der Gasturbine eingerichtet. Die Überprüfung der Positionierung und Ausrichtung muss nicht mehr manuell vom Bediener vorgenommen werden, und ist damit nicht mehr von subjektiven Faktoren eines Bedieners oder von unterschiedlichen Bedienern abhängig. Daraus folgt, dass der menschliche Faktor bei der Positionierung und Ausrichtung des Endoskops als Quelle von Fehlern und Ungenauigkeiten ausgeschlossen werden kann.

Die Positionsermittlung des Endoskops erfolgt vorzugsweise durch Bildverarbeitung der Bildaufnahmen durch die Datenverarbeitungseinrichtung. Teile oder Bereiche im Inneren des Triebwerks werden durch die Datenverarbeitungseinrichtung in den Bildaufnahmen erkannt, und daraus die Position und Ausrichtung des Endoskops relativ zu diesen Teilen oder Bereichen ermittelt. Die ermittelten Positionsdaten können anschließend erfindungsgemäß zur Positionierung und Ausrichtung des Endoskops genutzt werden, so dass das Endoskop in eine erfindungsgemäße definierte Position und Ausrichtung gebracht, und diese verifiziert werden kann. Weiterhin können andere Mittel zur Positionsbestimmung ergänzend oder alternativ genutzt werden.

Vorzugsweise sind positionsdefinierende Mittel zwischen dem Endoskopiesystem und der Gasturbine vorgesehen. Dies kann zum einen mechanische Mittel umfassen, die eine Festlegung des Endoskopiesystems relativ zur Gasturbine ermöglichen. Zum anderen können mechanische und/oder elektronische Mittel den Abgleich der Koordinatensysteme von Endoskop und Gasturbine ermöglichen, so dass eine Definition der Position erfolgen kann. Die positionsdefinierenden Mittel sind für eine definierte Positionierung und Ausrichtung des Endoskops vorteilhaft, insbesondere für eine elektronisch gesteuerte Positioniervorrichtung. Im weiteren sind positionsdefinierende Mittel für eine automatische Ermittlung der Position und/oder Ausrichtung des Endoskops vorteilhaft, so dass eine Kalibrierung der Position und/oder Ausrichtung des Endoskops erfolgen kann.

Das Endoskopiesystem ist vorzugsweise zur automatischen Bildnahme eingerichtet. Befindet sich das Endoskop in einer definierten Position und Ausrichtung, so wird eine Bildnahme von den entsprechenden Teilen oder Bereichen im Inneren der untersuchten Gasturbine durch das Datenverarbeitungssystem ausgelöst. Eine manuelle Auslösung der Bildnahme ist nicht mehr erforderlich, so dass sich die Untersuchung einer Gasturbine verkürzt.

Vorzugsweise ist die Datenverarbeitungseinrichtung dazu eingerichtet, eine Zuordnung von Bildaufnahmen der Bildaufnahmeeinrichtung zu Teilen oder Bereichen der untersuchten Gasturbine durchzuführen. Für eine Zuordnung von Teilen oder Bereichen aus dem Inneren einer Gasturbine zu Teilen oder Bereichen, die von einer Bildaufnahme erfasst wurden, ist es notwendig, die entsprechenden Teile oder Bereiche identifizieren zu können. Dies kann auf Grundlage der definierten Position und Ausrichtung des Endoskops und/oder Koordinaten relativ zur Gasturbine erfolgen, die aus der elektronisch gesteuerten Positioniervorrichtung bekannt sind. Alternativ kann die Zuordnung auf Grundlage einer Bilderkennung durch die Datenverarbeitungseinrichtung erfolgen. Dies ist besonders vorteilhaft für eine Dokumentation, durch die eine spätere Auswertung und Begutachtung der Untersuchung der Gasturbine ermöglicht wird.

Vorzugsweise ist das Endoskopiesystem zur automatischen Speicherung und/oder Archivierung von Bildaufnahmen eingerichtet. Erstellte Bildaufnahmen werden mit den erfassten Parametern, wie z.B. Datum, untersuchte Gasturbine und Teil oder Bereich der untersuchten Gasturbine, durch die Datenverarbeitungseinrichtung automatisch gespeichert und/oder archiviert, so dass Bildaufnahmen aus einer Untersuchung einer Gasturbine in einem Datensatz elektronisch abgelegt werden können. Die Speicherung oder Archivierung ist vorteilhaft für eine spätere Auswertung der Untersuchung sowie für eine Nachweisführung über die Untersuchung. Insbesondere kann die Archivierung durch die Datenverarbeitungseinrichtung auf mindestens einem Server erfolgen, der einen dezentralen Zugriff auf den Datensatz ermöglicht. Weiterhin werden durch das Endoskopiesystem vorzugsweise Parameter der Bildnahme, wie z.B. Ausleuchtung, Fokussierung und Belichtungszeit eingestellt.

Vorzugsweise ist die Bildaufnahmeeinrichtung dazu eingerichtet, Bildaufnahmen in Abhängigkeit von der Drehposition von mindestens einer Welle der Gasturbine zu tätigen. Die Drehposition einer Welle ist entscheidend für die Position von Rotorschaufeln einer Gasturbine. Neben der definierten Position und Ausrichtung des Endoskops in der Gasturbine ist die gleichzeitige definierte Position und Ausrichtung des Endoskops zu einem rotierenden Teil oder Bereich in einer Gasturbine entscheidend für eine entsprechende Bildaufnahme. Definierte Bildausschnitte für Bildaufnahmen von rotierenden Teilen oder Bereichen einer Gasturbine ergeben sich nur, wenn sich das Endoskop in einer definierten Position und Ausrichtung befindet, und wenn eine bestimmte Drehpositionen der Welle, mit der das rotierende Teil oder der rotierende Bereich verbunden ist, eingestellt ist. Daher werden die Bildaufnahmen vorzugsweise in Abhängigkeit von der Drehposition der entsprechenden Welle erstellt.

In einer bevorzugten Ausführungsform erfolgt die Bildnahme bei rotierender Welle und synchronisiert mit der Drehbewegung der Welle. Auf diese Weise kann Prüfgeschwindigkeit deutlich erhöht und die Prüfdauer pro Gasturbine erheblich reduziert werden. Die Synchronisierung kann auf jede geeignete Weise geschehen. Vorteilhaft erfolgt die Synchronisierung, wenn eine entsprechende Drehposition passiert wird, die vorteilhaft mittels einer Markierung, beispielsweise dem Schaufelschloss, definiert wird. Die Synchronisierung muss nicht bei jedem Wellenumlauf erfolgen, eine Synchronisierung bei jedem n-ten Wellenumlauf (beispielsweise n=10) kann ausreichend sein. Die Erfassung der Drehposition kann auch durch die Bildaufnahmeeinrichtung erfolgen. Bei ebenfalls denkbarer Verwendung eines Schrittmotors oder Synchronmotors für den Antrieb der Welle steht die Drehwinkel- bzw. Positionsinformation ohne zusätzliche Messung zur Verfügung.

In einer alternativen Ausführungsform wird die Drehposition der Welle durch das Endoskopiesystem erfasst und für die Bildnahme entsprechend eingestellt.

Erfindungsgemäß ist das Endoskopiesystem zum Steuern einer Drehvorrichtung zum Rotieren von mindestens einer Welle der Gasturbine eingerichtet. Mindestens eine Welle der untersuchten Gasturbine ist mit einer Drehvorrichtung verbunden, die dazu eingerichtet ist, auf die Drehbewegung der Welle zu wirken. Diese Drehvorrichtung ist durch das Endoskopiesystem steuerbar, so dass die Drehposition der Welle und somit die Bildausschnitte für die Bildaufnahmen eingestellt werden können. In einer bevorzugten Ausführungsform ist die Drehvorrichtung dazu eingerichtet, eine Rotation bzw. kontinuierliche Verstellung der Drehposition von mindestens einer Welle zu erzeugen, insbesondere um eine mit der Rotation der Welle synchronisierte Bildnahme zu ermöglichen. Alternativ kann die Rotation durch manuelles Einwirken erfolgen.

Die Datenverarbeitungseinrichtung ist vorzugsweise dazu eingerichtet, Bildaufnahmen mit Referenzbildaufnahmen und/oder mit archivierten Bildaufnahmen zu vergleichen. Für einen Vergleich von Bildaufnahmen von Teilen oder Bereichen einer Gasturbine ist die erfindungsgemäße definierte Positionierung und Ausrichtung des Endoskops durch das Endoskopiesystem besonders vorteilhaft, da dadurch ein Vergleich mehrerer Bildaufnahmen vorteilhaft mit bildverarbeitenden Mitteln ermöglicht wird. Ein Vergleich von mehreren Bildaufnahmen ist vorteilhaft, um Unterschiede an Teilen oder Bereichen einer Gasturbine zwischen mehreren Untersuchungen automatisch erkennen zu können, und die erkannten Unterschiede in geeigneter Weise kenntlich zu machen.

Vorzugsweise ist die Datenverarbeitungseinrichtung zur automatischen Erkennung von Abweichungen vom Sollzustand und/oder Schäden an Teilen oder Bereichen der untersuchten Gasturbine eingerichtet. Die Abweichung vom Sollzustand kann durch einen Vergleich mit einer Referenzaufnahme bestimmt werden. Als Referenzbild kann eine archivierte Bildaufnahme angesehen werden, die beispielsweise die Gasturbine im neuen oder neuwertigen Zustand zeigt. Alternativ kann eine Referenzaufnahme von einer anderen Gasturbine stammen. Ferner kann als Referenzaufnahme ein computergeneriertes Bild dienen. Die automatische Erkennung von Abweichungen vom Sollzustand und/oder Schäden ist für die Untersuchung einer Gasturbine besonders vorteilhaft, weil beispielsweise die vom Endoskopiesystem erkannten Schäden dem Bediener bei der Auswertung kenntlich gemacht werden können. Dadurch kann die Fehlerwahrscheinlichkeit bei der Erkennung von Schäden durch den Bediener zusätzlich reduziert werden. Weiterhin ist es möglich, dass nur Bildaufnahmen mit erkannten Abweichungen und Schäden dem Bediener vorgelegt werden, um eine Bewertung vorzunehmen. Dies reduziert die Arbeitsbelastung des Bedieners und die notwendige Prüfzeit.

Vorzugsweise ist die Datenverarbeitungseinrichtung dazu eingerichtet, eine Vermessung von Schäden an Teilen oder Bereichen im Inneren einer Gasturbine durchzuführen. Für die Bewertung von Schäden an einer Gasturbine, wie z.B. Rissen oder Beulen, sind die geometrischen Ausmaße des Schadens von entscheidender Bedeutung. Die Vermessung der Schäden erfolgt anhand von Bildaufnahmen durch das Datenverarbeitungssystem. Gestützt werden kann die Vermessung durch bekannte Größen von Teilen in der Bildaufnahme und/oder durch die definierte Position und Ausrichtung des Endoskops relativ zu den Teilen oder Bereichen in der Bildaufnahme und den daraus generierbaren Größen von Teilen oder Bereichen in einer Bildaufnahme. Dies ist vorteilhaft, weil eine Bewertung von Schäden in der Regel anhand ihrer geometrischen Größen erfolgt.

Vorzugsweise ist die Datenverarbeitungseinrichtung dazu eingerichtet, eine Klassifizierung von Schäden an Teilen oder Bereichen im Inneren einer Gasturbine durchzuführen. Eine Klassifizierung kann beispielsweise anhand der Größe von Abweichungen vom Sollzustand und/oder anhand der Größe von Schäden erfolgen. Weiterhin ist es möglich, dass die Klassifizierung zusätzlich nach Art der Teile oder Bereiche durchgeführt wird, so dass kleinere Schäden an kritischen Teilen anders klassifiziert werden als an unkritischen Teilen. Alternativ kann eine Klassifizierung nach der Art des Schadens oder der Abweichung erfolgen. Darüber hinaus kann eine Klassifizierung der Schäden nach ihrem Einfluss auf die Lufttüchtigkeit einer in einem Fluggerät eingesetzten Gasturbine erfolgen, beispielsweise nach Schäden, die erst bei der nächsten Überholung behoben werden müssen, oder nach Schäden, die die Lufttüchtigkeit einschränken. Kombinationen dieser Klassifizierungen sind ebenfalls möglich. Die Klassifizierung wird vorzugsweise dazu eingesetzt, die Prüfzeit zu reduzieren und die Dokumentation zu vereinfachen. Beispielsweise können einem Bediener bei der Untersuchung mit dem erfindungsgemäßen Endoskopiesystem als kritisch klassifizierte Schäden zuerst dargestellt werden, so dass bei einer möglichen notwendigen Stilllegung dieser Befund frühzeitig bei der Untersuchung erkannt werden kann.

Vorzugsweise ist die Datenverarbeitungseinrichtung dazu eingerichtet, den Verlauf von Schäden an Teilen oder Bereichen im Inneren einer Gasturbine zu verfolgen. Detektierte Schäden werden durch die Datenverarbeitungseinrichtung mit archivierten Bildaufnahmen verglichen. Der Verlauf der Größe von Schäden, wie z.B. Rissen, kann anhand von archivierten Bildaufnahmen früherer Untersuchungen im Zeitverlauf verfolgt werden. Dies kann zum einen bildlich erfolgen, oder anhand von geometrischen Größen verfolgt werden. Dadurch kann erkannt werden, ob sich ein Schaden vergrößert hat oder, z.B. die Größe eines Risses, zwischen unterschiedlichen Untersuchungen einer Gasturbine stabil geblieben ist.

Vorzugsweise ist die Datenverarbeitungseinrichtung zur Durchführung eines Prognoseverfahrens eingerichtet, um den weiteren Verlauf von Schäden an Teilen oder Bereichen im Inneren der untersuchten Gasturbine zu prognostizieren. Sind die Schadensgrößen, wie z.B. eine Risslänge, zu mehreren Untersuchungszeitpunkten eines Triebwerks bekannt, kann unter Zuhilfenahme des Betriebsprofils der untersuchten Gasturbine und eines in der Datenverarbeitungseinrichtung implementierten Schadensmodells Schadensgrößen, wie beispielsweise die Rissfortschrittsgeschwindigkeit eines Risses, ermittelt werden. Daraus ist durch die Datenverarbeitungseinrichtung eine Prognose über den weiteren erwarteten Schadensverlauf erzeugbar. Dies ist vorteilhaft für die effiziente zeitliche Planung von Überholungen und Reparaturen der Gasturbine sowie für die Betriebssicherheit.

Weiterhin wird ein Verfahren zum Untersuchen von Gasturbinen mit einem erfindungsgemäßen Endoskopiesystem bereitgestellt, wobei im ersten Verfahrensschritt das Endoskop des erfindungsgemäßen Endoskopiesystems in das Innere einer Gasturbine eingebracht wird. Im nächsten Verfahrensschritt wird das Endoskop des Endoskopiesystems durch die Datenverarbeitungseinrichtung definiert im Inneren der Gasturbine positioniert und ausgerichtet. Im letzten Verfahrensschritt werden Bildaufnahmen von Teilen oder Bereichen der Gasturbine aus der definierten Position und Ausrichtung durch die Bildaufnahmeeinrichtung erstellt.

Die Erfindung wird im Folgenden anhand bevorzugter Ausführungsformen unter Bezugnahme auf die beigefügten Figuren erläutert. Dabei zeigt:
- Fig. 1: Schematische Darstellung einer Untersuchung einer Gasturbine mit dem Endoskopiesystem;
- Fig. 2: mehrere Bildaufnahmen von Untersuchungen eines Bereichs einer Gasturbine mit dem Endoskopiesystem;

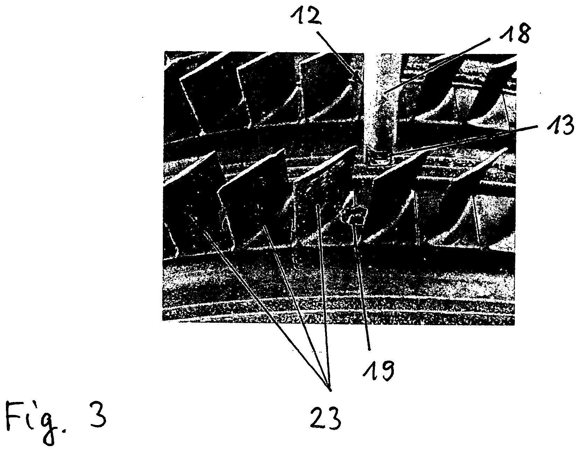

- Fig. 3: eine perspektivische Ansicht eines Endoskops und eines zu untersuchenden Schaufelrades in einer Gasturbine; und
- Fig. 4 -7: schematische Darstellungen verschiedener Bildaufnahme- und/oder Beleuchtungsgeometrien.

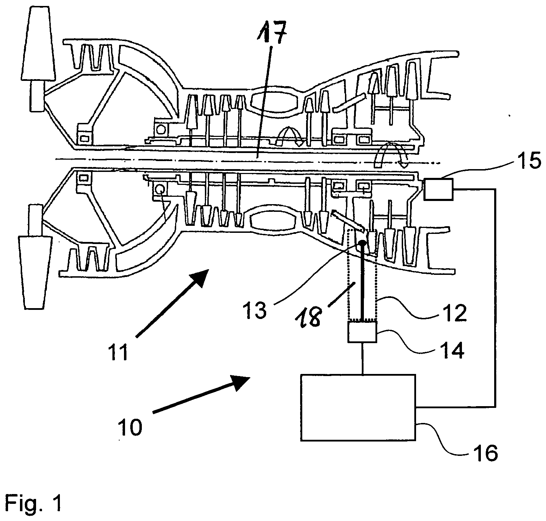

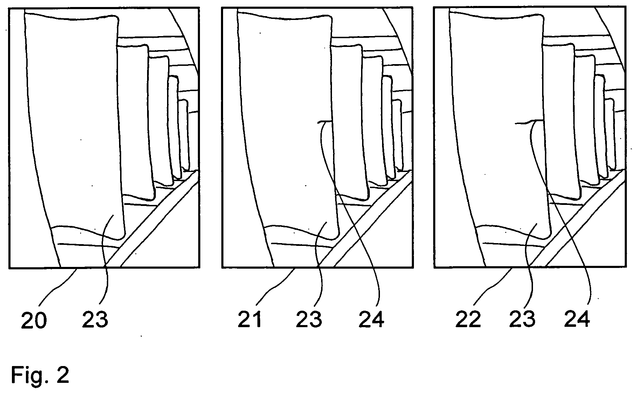

In Fig. 1 ist schematisch das erfindungsgemäße Endoskopiesystem 10 bei der Untersuchung einer Gasturbine 11 dargestellt. Das Endoskop 12 des Endoskopiesystems 10 umfasst vorzugsweise einen Schaft 18 zum Einbringen des Endoskops 12 in die Gasturbine 11 und eine die Bildaufnahmeeinrichtung 13, die Bildaufnahmen 20, 21, 22 vom Inneren der Gasturbine 11 (siehe Fig. 2) erstellen kann. Die Bildaufnahmeeinrichtung 13, die vorzugsweise an einem freien Ende des Schaftes 18 angeordnet ist, kann vorzugsweise eine Kamera sein und umfasst typischerweise eine Optik sowie einen Kamerachip bzw. Bildsensor zur Erfassung von Bildern und Umwandlung in elektronische Bilddaten. Es ist möglich, dass Teile der Kamera 13, beispielsweise der Bildsensor, insbesondere aus Platzgründen entfernt von dem der am freien Ende des Schaftes 18 angeordneten Kameraoptik angeordnet ist bzw. sind. In diesem Fall kann die Bildinformation beispielsweise mittels eines durch den Schaft verlaufenden Lichtleiters von der Kameraoptik zu dem Bildsensor geleitet werden. In einer Ausführungsform kann die Bildaufnahmeeinrichtung 13 beispielsweise eine Scheimpflugkamera sein, die Erfindung ist aber keinesfalls auf diesen Kameratyp beschränkt.

In einer weiteren Ausführungsform können eine Mehrzahl von Kameras verwendet werden, beispielsweise eine Kamera mit Farberkennung und eine schnelle Kamera mit Schwarz-Weiß-Erkennung. Dazu können beispielsweise mehrere Endoskope mit jeweils einer Kamera vorgesehen sein. Alternativ kann ein Endoskop vorgesehen sein, bei dem die Bildaufnahmeeinrichtung 13 eine Mehrzahl von Kameras umfasst. Die Auswahl der Kamera für die finale Aufnahmeserie kann beispielsweise aufgrund der Aufnahmesituation erfolgen.

Eine Positioniervorrichtung 14 ist mit dem Endoskop 12 verbunden und ist dazu eingerichtet, das Endoskop 12 im Inneren der Gasturbine 11 zu positionieren. Vorzugsweise ist eine Drehvorrichtung 15 bzw. ein Drehantrieb zum Rotieren der Welle 17 der Gasturbine 11 vorgesehen.

Eine Datenverarbeitungseinrichtung 16 ist zur Steuerung des Endoskopiesystems 10 und zur Verarbeitung der von dem Endoskop 12 genommenen Daten vorgesehen. Um Maßstabsverzerrungen auszugleichen und eine Standardisierung zu erreichen, umfasst die Bildverarbeitung vorzugsweise eine Entzerrung der aufgenommenen Bilder.

In einer typischen Untersuchung einer Gasturbine 11 wird das Endoskop 12 zunächst in den zu untersuchenden Abschnitt der Gasturbine 11 eingebracht. Das Endoskop 12 wird hierfür durch eine geeignete Öffnung in der Gasturbine 11 eingeführt.

In einer vorteilhaften Ausführungsform werden beim Einbringen des Endoskops 12 in eine Gasturbine 11 positionsdefinierende Mittel verwendet. Dies kann ein mechanischer Anschlag oder eine mechanische Verbindung sein, die es ermöglicht, dass die Koordinatensysteme des Endoskopiesystems 10 und der Gasturbine 11 in einer vordefinierten Beziehung zueinander stehen, so dass die relative Position von Endoskop 12 und Gasturbine 11 durch positionsdefinierende Mittel definiert wird. In einer weiteren möglichen Ausführungsform sind die positionsdefinierenden Mittel in Form von Messtechnik realisiert, die einen Abgleich der relativen Position ermöglichen.

Eine automatische Ermittlung der Position des Endoskops 12, insbesondere der Bildaufnahmeeinrichtung 13, im Inneren der Gasturbine 11 kann zum einen auf Basis der positionsdefinierenden Mittel, vorzugsweise mit einer folgenden Messung der weiteren Bewegungen des Endoskops 12, erfolgen. Alternativ oder zusätzlich kann eine automatische Positionsermittlung anhand der Bildinformationen, die durch die Bildaufnahmeeinrichtung 13 an die Datenverarbeitungseinrichtung 16 übermittelt werden, erfolgen. Die Positionsermittlung aus den Daten der Bildaufnahmeeinrichtung 13 ist besonders vorteilhaft bei der Feinpositionierung, da auf diese Weise eine genaue Einhaltung der Position und Ausrichtung der Bildaufnahmeeinrichtung 13 in der Gasturbine 11 direkt überprüfbar wird.

Erfindungsgemäß findet eine automatische Positionsermittlung der Drehposition bzw. des Drehwinkels der Welle 17 statt. Dies erfolgt erfindungsgemäß durch die Bildaufnahmeeinrichtung 13 und geeignete Bildverarbeitung in der Datenverarbeitungseinrichtung 16. Die absolute Drehposition der Welle 17 kann insbesondere anhand einer Markierung oder eines geeigneten Referenzpunktes ermittelt werden. Vorteilhafterweise wird als Marke bzw. Referenzpunkt das in der Regel ohnehin vorhandene Schaufelschloss 19 (blade lock) per Bildverarbeitung detektiert. Alternativ oder zusätzlich können eine oder mehrere zusätzliche Markierungen vorgesehen sein. Die Position einzelner Turbinenschaufeln 23 kann relativ zu der Marke bestimmt werden, so dass die Identität der einzelnen Turbinenschaufeln 23 bekannt ist.

In alternativen Ausführungsformen kann ein zusätzlicher Sensor zur Erfassung der Drehposition von drehenden Teilen der Gasturbine 11 vorgesehen sein.

Die Bewegung des Endoskops 12 erfolgt durch eine elektronisch gesteuerte Positioniervorrichtung 14, die durch manuelle Eingabe bedient werden kann, und/oder durch die Datenverarbeitungsvorrichtung 16 automatisch gesteuert werden kann. Die Positioniervorrichtung 14 übernimmt die Positionierung und Ausrichtung der Bildaufnahmeeinrichtung 13 des Endoskops 12 relativ zur Gasturbine 11. Dies erfolgt durch elektronisch angesteuerte Steller, die eine präzise Bewegung des Endoskops 12 ermöglichen. In einer möglichen Ausführungsform sind die Steller mit entsprechender Sensorik ausgestattet, um eine Messung des Stellwegs an die Datenverarbeitungseinrichtung 16 zu ermöglichen. Die Messung des Stellwegs der Steller der Positioniervorrichtung 14 kann ebenfalls Grundlage einer automatischen Positionsermittlung sein. Die Positioniervorrichtung kann an einem nicht in eine Gasturbine eingeführten Ende des Endoskops mit dem Endoskop verbunden sein. Weiterhin kann das Endoskop die Positioniervorrichtung oder Teile davon umfassen.

Weiterhin ist für eine definierte Bildnahme von rotierenden Teilen der Gasturbine 11 die Kenntnis einer definierte Beziehung zwischen Rotationsstellung relativ zum Endoskop 12 vorteilhaft. Hierfür kann eine elektronisch gesteuerte Drehvorrichtung 15, die mindestens eine Welle der untersuchten Gasturbine 11 rotieren kann, durch die Datenverarbeitungseinrichtung 16 angesteuert werden. Die Drehvorrichtung 15 kann in einer möglichen Ausführungsform dazu eingesetzt werden, eine kontinuierliche Rotation mindestens einer Welle zu erzeugen.

In einer vorteilhaften Ausführungsform erfolgt die Bildnahme durch die Bildaufnahmeeinrichtung 13 bei kontinuierlich rotierender Welle. Die Bildaufnahmeeinrichtung ist dann vorzugsweise zur synchronisierten Bildnahme mit der Drehbewegung der Welle 17 der Gasturbine 11 eingerichtet. Die Synchronisierung kann vorteilhaft anhand einer Markierung der Rotationsposition der Welle 17, beispielsweise des Schaufelschlosses 19, erfolgen. Alternativ oder zusätzlich kann die Bildnahme auf eine gemessene Position einer oder mehrerer Turbinenschaufeln 23 getriggert sein.

In einem praktischen Verfahrensablauf kann zunächst ein Versuchsdurchlauf erfolgen, in dem beispielsweise die Momentangeschwindigkeit der Turbinenschaufeln 23 ermittelt bzw. geschätzt wird. Aus dem Versuchsdurchlauf werden beispielsweise Vorhaltezeiten ermittelt, die anschließend zur Durchführung der finalen Aufnahmeserie verwendet werden können.

In einer alternativen Ausführungsform stellt die Drehvorrichtung 15 eine oder mehrere Drehpositionen der Welle 17 gezielt ein und hält die eingestellte Position insbesondere während der Bildnahme fest.

Die definierte Positionierung und Ausrichtung des Endoskops 12 mit dem erfindungsgemäßen Endoskopiesystem 10 ermöglicht standardisierte Bildaufnahmen 20, 21, 22, siehe Fig. 2, von Teilen oder Bereichen im Inneren der Gasturbine 11.

Teile und Bereiche im Inneren einer Gasturbine 11 sind vorzugsweise alle Objekte, die eine Oberfläche zum Gasstrom der Gasturbine 11 aufweisen, insbesondere Rotor- und Statorschaufeln, Verkleidungen und Brennkammern. Weiterhin sind dies sämtlich Bereiche einer Gasturbine 11, die im montierten Zustand durch spezielle Endoskopiezugänge einer Untersuchung oder Prüfung zugänglich sind. Ein bestimmtes Teil in einer Gasturbine 11 kann beispielsweise die Rotorschaufel Nummer 3, der ersten Stufe der Hochdruckturbine sein. Die definierte Positionierung und Ausrichtung des Endoskops 12 in der Gasturbine 11 sowie die entsprechende Drehposition ermöglichen die definierte Bildnahme dieses Teils aus einer bestimmten Richtung, so dass die Bildaufnahme 20, 21, 22 dieses Teil mit einem bestimmten Bereich seiner Oberfläche zeigt.

Für eine gezielte Untersuchung und deren Dokumentation ist die Zuordnung einer Bildaufnahme 20, 21, 22 zu einem Teil der untersuchten Gasturbine 11 vorteilhaft.

Erfindungsgemäß ist das Endoskopiesystem 10 daher dazu eingerichtet, eine automatische Zuordnung von Teilen zu Bildaufnahmen 20, 21, 22 durchzuführen. Dies kann beispielsweise anhand der Positionsdaten erfolgen und/oder durch eine automatisierte Bilderkennung durch die Datenverarbeitungseinrichtung 16 von mindestens einer Markierung oder eines Kennzeichens, die bzw. das zur Bestimmung der Identität von Teilen geeignet ist. Eine geeignete Markierung ist beispielsweise ein Schaufelschloss 19 (blade lock), das eine eindeutige Nullposition für die Schaufeln darstellen kann, wodurch mit einer einfachen Zählung von dieser Nullposition aus eine eindeutige Zuordnung der Schaufeln möglich ist.

Für die standardisierte Bildnahme sind neben der relativen Position und Ausrichtung der Bildaufnahmeeinrichtung 13 zum aufgenommen Objekt auch die Einstellungen der Bildaufnahmeeinrichtung 13 entscheidend. Daher werden die Einstellungen der Bildaufnahmeeinrichtung 13 in einer bevorzugten Ausführungsform durch die Datenverarbeitungseinrichtung 16 gesteuert. Diese Einstellungen können beispielsweise die Fokussierung, Verschlusszeit, Bildausschnitt und die Beleuchtung durch eine Lichtquelle sein.

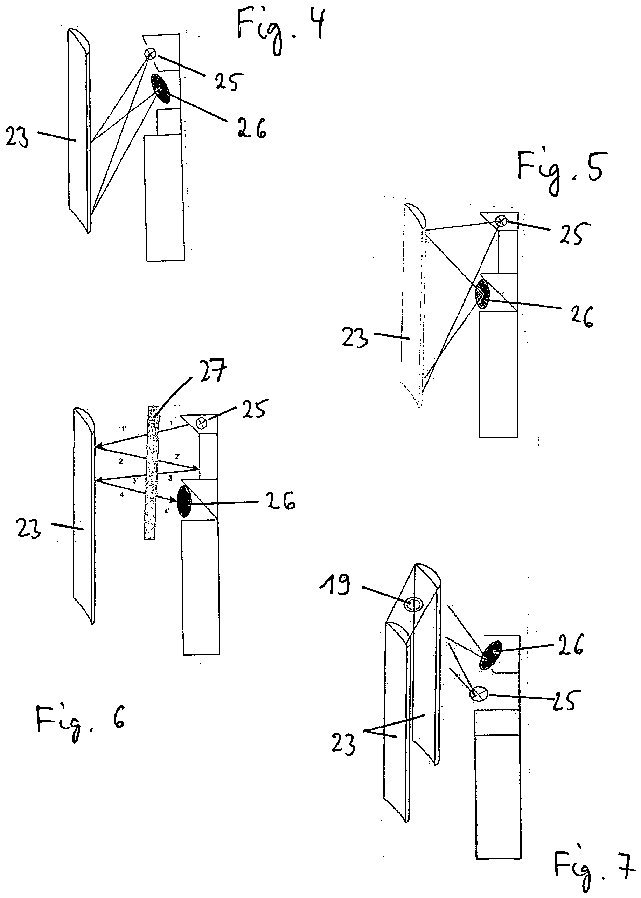

In Ausführungsformen der Erfindung ist eine Lichtquelle 25 zur aktiven Beleuchtung der aufzunehmenden Oberfläche vorgesehen. Verschiedene Geometrien bzw. Anordnungen der Lichtquelle 25 relativ zu der Optik 26 und der entsprechenden Apertur sind in den Figuren 4 bis 7 gezeigt. Um Störeinflüsse durch den direkten Reflex des Lichtstrahls von der Lichtquelle 25 an der aufzunehmenden Oberfläche in den Bildern zu vermeiden, kann beispielsweise eine schräg einfallende Beleuchtung vorgesehen sein, wie beispielsweise in den Figuren 4, 5 und 7 gezeigt, wobei die Anordnung so gewählt ist, dass kein Lichtstrahl von der Lichtquelle 25 direkt auf die Optik 26 reflektiert wird.

Auch die Verwendung eines Filters 27, siehe Figur 6, beispielsweise eines Fourierfilters unter Ausnutzung des Dunkelfeldeffekts, oder eines Dichtefilters, ist möglich. Des Weiteren kann eine regelmäßige radiometrische Kalibrierung der Bildaufnahmeeinrichtung 13 vorteilhaft sein.

In einer bevorzugten Ausführungsform ist das Endoskopiesystem 10 in der Lage, eine automatische Bildnahme durchzuführen. Die Bildaufnahmeeinrichtung 13 liefert typischerweise kontinuierlich Bilddaten an die Datenverarbeitungseinrichtung 16, die zu Zwecken der Bilderkennung, Positionserkennung, Drehpositionserkennung sowie Erkennung von Teilen und/oder Bereichen ausgewertet werden können. Die eigentliche Bildnahme erzeugt eine Bildaufnahme 20, 21, 22, die für die Zwecke der Untersuchung der Gasturbine 11 geeignet ist. Daher weist die Bildaufnahme 20, 21, 22 den entsprechenden Ausschnitt eines Teils, z.B. eine Turbinenschaufel 23, auf. Erkennt die Datenverarbeitungseinrichtung 16 durch entsprechende Mittel, dass die Bilddaten, Positionsdaten und vorzugsweise auch die Zuordnung mit den definierten Zielwerten übereinstimmen, so folgt eine automatische Bildnahme. Die entsprechenden Daten werden mit der Bildaufnahme 20, 21, 22 durch die Datenverarbeitungseinrichtung verknüpft. Durch die automatische Bildnahme ist keine manuelle Kontrolle der entsprechenden Parameter notwendig, und dem Bediener der Gasturbine 11 kann durch das Endoskopiesystem 10 direkt eine zur weiteren Auswertung geeignete Bildaufnahme 20, 21, 22 zur Verfügung gestellt werden.

In einem bevorzugten Ausführungsbeispiel erfolgt eine automatische Speicherung und Archivierung der Bildaufnahmen 20, 21, 22, so dass diese für eine Dokumentation, Auswertung und Nachweisführung zu einem späteren Zeitpunkt zur Verfügung stehen. Die Archivierung kann direkt in der Datenverarbeitungseinrichtung 16 des Endoskopiesystems 10 erfolgen oder in einer zentralen Datenbank, so dass mehrere Endoskopiesysteme 10 auf die gleiche Datenbank zugreifen können.

Weiterhin ist das erfindungsgemäße Endoskopiesystem 10 in einer möglichen Ausführungsform mit einer Bildaufnahmeeinrichtung 13 ausgestattet, die eine Stereoaufnahmeeinrichtung ist.

In einer weiteren möglichen Ausführungsform weist das Endoskop 12 mindestens eine Diagnoseeinrichtung zur zerstörungsfreien Untersuchung von Teilen oder Bereichen im Inneren einer Gasturbine 11 auf. Die weitere Diagnoseeinrichtung kann verschiedene Möglichkeiten zur zerstörungsfreien Prüfung umfassen, wie z.B. eine Wirbelstromsonde oder Diagnoseeinrichtung zum Farbeindringverfahren.

Der Anwendungsbereich des erfindungsgemäßen Endoskopiesystems 10 bei der Untersuchung von Gasturbinen 11 umfasst die Untersuchung von Strahltriebwerken von Luftfahrzeugen, wie z.B. Turbofans oder Turbojets und/oder industriell genutzter Strahltriebwerke, wie z.B. Schiffsturbinen oder Turbinen in Stromkraftanlagen.

Fig. 2 zeigt mehrere Bildaufnahmen 20, 21, 22 von Untersuchungen eines Bereichs einer Gasturbine 11 mit dem erfindungsgemäßen Endoskopiesystem 10, die jeweils den gleichen Bildausschnitt aus dem Inneren einer Gasturbine 11 zeigen. Es sind Rotorschaufeln einer Hochdruckturbinenstufe dargestellt, wobei die Hinterkanten der Rotorschaufeln im Bildausschnitt von der jeweils vorderen verdeckt werden. Im Vordergrund ist in diesem Ausführungsbeispiel die zu untersuchende Turbinenschaufel 23 abgebildet.

Bildaufnahme 20 zeigt die Turbinenschaufel 23 in ihrem Referenzzustand. Die Bildaufnahme 20 des Referenzzustands dient als Darstellung des optimalen technischen Zustands der Turbinenschaufel 23 und kann entweder eine archivierte Bildaufnahme 20 der Gasturbine 11 in diesem Zustand sein oder gezielt für den Zweck als Referenz generiert sein. Diese Referenzbildaufnahme 20 kann in der Datenverarbeitungseinrichtung 16 oder in der zentralen Datenbank hinterlegt sein. Die Informationen über Position und Ausrichtung der Bildaufnahmeeinrichtung 13, mit denen die Bildaufnahme 20 erstellt wurde, sind an die Bildaufnahme 20 geknüpft, und erfindungsgemäß wird die Position und Ausrichtung des Endoskops 12 und der Bildaufnahmeeinrichtung 13 bei allen weiteren Bildaufnahmen 21 und 22 folgender Untersuchungen der Turbinenschaufel 23 verwendet, wodurch die Position und Ausrichtung des Endoskops 12 definiert wird.

Das Ausführungsbeispiel zeigt in den Bildaufnahmen 20, 21 und 22 die entsprechende Turbinenschaufel 23 der Gasturbine 11 bei unterschiedlichen Untersuchungen, so dass die Gasturbine 11 eine gewisse Betriebszeit zwischen den Untersuchungen aufweist. Bildaufnahme 22 zeigt die Turbinenschaufel 23 mit der längsten Betriebszeit, gegenüber Bildaufnahme 20 mit der kürzesten Betriebszeit der drei Bildaufnahmen 20, 21 und 22. Den Bildaufnahmen 20, 21, 22 ist somit eine Betriebsstundenzahl der Gasturbine zuordenbar.

Anhand der Bildaufnahmen 20, 21 und 22 ist der erfindungsgemäße Vorteil einer definierten Positionierung und Ausrichtung des Endoskops 12 erkennbar. Die gleiche Positionierung und Ausrichtung bei unterschiedlichen Untersuchungen führt zu einer sehr guten Vergleichbarkeit der verschiedenen Bildaufnahmen 20, 21, 22. Dies ist zum einen bei der manuellen Begutachtung durch den Bediener vorteilhaft, zum anderen ermöglicht dies bei einer elektronischen Verarbeitung die einfache Erkennung von Unterschieden bzw. Veränderungen. Die Überlagerung von Bildaufnahme 20 und 21 lässt beispielsweise sehr leicht den Riss 24 erkennen. Da die Bildaufnahme 20 in diesem Ausführungsbeispiel als Referenzbild dient, kann der Riss 24 durch Vergleich der Bildaufnahmen 20 und 21 sehr schnell als Abweichung vom Sollzustand erkannt werden.

In einer bevorzugten Ausführungsform erkennt die Datenverarbeitungseinrichtung 16 diese Abweichung vom Sollzustand automatisch und fügt beispielsweise für eine Begutachtung durch den Bediener eine entsprechende Hinweismarkierung in die Bildaufnahme 21 ein. Weitere mögliche Abweichungen vom Sollzustand, die vom erfindungsgemäßen Endoskopiesystem 10 in diesem Ausführungsbeispiel erkannt werden können, sind Schäden, wie z.B. Abnutzung, Risse, Kerben, Löcher oder Fremdteile.

In einem Ausführungsbeispiel ist die Datenverarbeitungseinrichtung 16 des Endoskopiesystems 10 dazu eingerichtet, eine Vermessung von Schäden durchzuführen. Der Riss 24 wird beispielsweise anhand der Bilddaten und entsprechender Referenzen vermessen, und die Datenverarbeitungseinrichtung 16 gibt eine entsprechende geometrische Risslänge aus.

In einem weiteren vorteilhaften Ausführungsbeispiel kann mit dem Endoskopiesystem 10 eine automatische Klassifizierung der Schäden erfolgen, z.B. wird durch die Datenverarbeitungseinrichtung 16 der Riss 24 zunächst als Riss klassifiziert. Eine weitere Klassifizierung kann beispielsweise anhand der Risslänge erfolgen, die in diesem Ausführungsbeispiel innerhalb angenommener Grenzwerte liegt, und damit bis zur nächsten planmäßigen Untersuchung der Gasturbine 11 keine Einschränkung der Betriebssicherheit darstellt. Die Klassifizierung kann dem Bediener zur Verfügung gestellt werden, der so gezielt nach bestimmten Arten von Schäden suchen kann. Erkennt die Datenverarbeitungseinrichtung 16 beispielsweise einen fatalen Schaden, kann dies in der Dokumentation und in der Darstellung für den Bediener entsprechend deutlich kenntlich gemacht werden.

Bildaufnahme 22 zeigt die gleiche Turbinenschaufel 23 bei einer späteren Untersuchung. Der Vergleich der Bildaufnahme 22 mit den Bildaufnahmen 20 und 21 zeigt eine Abweichung vom Sollzustand aus Bildaufnahme 20 und eine Veränderung des Schadens, der bei der vorherigen Untersuchung, Bildaufnahme 21, festgestellt wurde. Der Riss 24 ist somit während des zwischenzeitlichen Betriebs der Gasturbine weiter gewachsen. Die Datenverarbeitungseinrichtung 16 ist in diesem Ausführungsbeispiel dazu eingerichtet, den Riss 24 automatisch zu erkennen und zu vermessen und einer Betriebsstundenzahl der Gasturbine 11 und/oder der Turbinenschaufel 23 zuzuordnen. Damit ist es möglich, den Riss 24 im Zeitverlauf der Betriebsstunden zu verfolgen, wodurch erkennbar ist, dass der Riss 24 weiter gewachsen ist. Weiterhin kann so der Eintrittszeitpunkt des Schadens eingegrenzt werden. In diesem Beispiel wäre der Schaden zwischen den Bildaufnahmen 20 und 21 eingetreten.

In einem bevorzugten Ausführungsbeispiel werden die Informationen über den Schadensverlauf in der Datenverarbeitungseinrichtung 16 dazu eingesetzt, eine Prognose des weiteren Schadensverlauf in der Zukunft durchzuführen. Hierdurch kann der Eintrittszeitpunkt einer kritischen Risslänge genauer abgeschätzt werden und die Wartungsintervalle entsprechend angepasst werden. In einem weiteren möglichen Ausführungsbeispiel ist die Datenverarbeitungseinrichtung 16 dazu eingerichtet, das Prognoseverfahren zur Prognose von Schadensverläufen auf Basis archivierter Bildaufnahmen 20, 21, 22 von einer Vielzahl von Gasturbinen 11 zu optimieren.

## Patentansprüche

1. Endoskopiesystem (10) zur Untersuchung von Gasturbinen (11), mit einem Endoskop (12) und einer Datenverarbeitungseinrichtung (16), wobei das Endoskop (12) eine Bildaufnahmeeinrichtung (13) umfasst, wobei das Endoskop (12) dazu eingerichtet ist, Bildaufnahmen (20,21,22) der Bildaufnahmeeinrichtung (13) vom Inneren der Gasturbine (11) zur Datenverarbeitungseinrichtung (16) zu übertragen, wobei das Endoskopiesystem (10) dazu eingerichtet ist, das in eine Gasturbine (11) eingebrachte Endoskop (12) mit der Bildaufnahmeeinrichtung (13) in der Gasturbine (11) definiert zu positionieren und auszurichten, wobei das Endoskopiesystem (10) eine elektronisch gesteuerte Positioniervorrichtung (14) zum definierten Positionieren und/oder Ausrichten des Endoskops (12) in der Gasturbine (11) aufweist, **dadurch gekennzeichnet, dass**
- eine Drehvorrichtung (15) zum Rotieren von mindestens einer Welle der Gasturbine (11) durch die Datenverarbeitungseinrichtung (16) ansteuerbar ist, wobei
- das Endoskopiesystem (10) zum automatischen Ermitteln der Position und/oder der Ausrichtung des Endoskops (12) in der Gasturbine (11) mittels Bildverarbeitung der Bildaufnahme (20, 21, 22) eingerichtet ist, wobei
- die Positioniervorrichtung (14) zur anschließenden Nutzung der ermittelten Positionsdaten zur Positionierung und Ausrichtung des Endoskops (12) eingerichtet ist, wobei
- das Endoskopiesystem (10) zum automatischen Ermitteln der Drehposition bzw. des Drehwinkels einer Welle (17) der Gasturbine (11) eingerichtet ist, wobei dies durch die Bildaufnahmeeinrichtung (13) und eine geeignete Bildverarbeitung in der Datenverarbeitungseinrichtung (16) erfolgt, wobei die absolute Drehposition der Welle (17) anhand einer Markierung ermittelt wird, wobei als Markierung ein Schaufelschloss (19) per Bildverarbeitung detektiert wird, wobei
- das Endoskopiesystem (10) dazu eingerichtet ist, eine automatische Zuordnung von Teilen der Gasturbine (11) zu Bildaufnahmen (20, 21, 22) der Bildaufnahmeeinrichtung (13) durchzuführen, wobei dies durch eine automatische Bilderkennung durch die Datenverarbeitungseinrichtung (16) der mindestens einen Markierung erfolgt, wobei das Schaufelschloss (19) als Markierung verwendet wird.

2. Endoskopiesystem (10) nach einem der vorangehenden Ansprüche, **dadurch gekennzeichnet, dass** positionsdefinierende Mittel zwischen dem Endoskop (12) und der Gasturbine (11) vorgesehen sind.

3. Endoskopiesystem (10) nach einem der vorangehenden Ansprüche, **dadurch gekennzeichnet, dass** das Endoskopiesystem (10) zur automatischen Bildnahme eingerichtet ist.

4. Endoskopiesystem (10) nach Anspruch 3, **dadurch gekennzeichnet, dass** das Endoskopiesystem (10) dazu eingerichtet ist, Bildaufnahmen (20,21,22) in Abhängigkeit von der Drehposition von mindestens einer Welle der Gasturbine (11) zu tätigen.

5. Endoskopiesystem (10) nach Anspruch 3 oder 4, **dadurch gekennzeichnet, dass** das Endoskopiesystem (10) zur synchronisierten Bildnahme mit der Drehbewegung mindestens einer Welle (17) der Gasturbine (11) eingerichtet ist.

6. Endoskopiesystem (10) nach einem der vorangehenden Ansprüche, **dadurch gekennzeichnet, dass** das Endoskopiesystem (10) zur automatischen Speicherung oder Archivierung von Bildaufnahmen (20,21,22) durch die Datenverarbeitungseinrichtung (16) eingerichtet ist.

7. Endoskopiesystem (10) nach einem der vorangehenden Ansprüche, **dadurch gekennzeichnet, dass** die Datenverarbeitungseinrichtung (16) dazu eingerichtet ist, Bildaufnahmen (20,21,22) mit Referenzbildaufnahmen und/oder mit archivierten Bildaufnahmen zu vergleichen.

8. Endoskopiesystem (10) nach einem der vorangehenden Ansprüche, **dadurch gekennzeichnet, dass** die Datenverarbeitungseinrichtung (16) zur automatischen Erkennung von Abweichungen vom Sollzustand und/oder Schäden an Teilen oder Bereichen der untersuchten Gasturbine (11) eingerichtet ist.

9. Endoskopiesystem (10) nach einem der vorangehenden Ansprüche, **dadurch gekennzeichnet, dass** die Datenverarbeitungseinrichtung (16) dazu eingerichtet ist, eine Vermessung und/oder Klassifizierung und/oder Verfolgung des Verlaufs von Schäden an Teilen oder Bereichen im Inneren einer Gasturbine (11) durchzuführen.

10. Endoskopiesystem (10) nach einem der vorangehenden Ansprüche, **dadurch gekennzeichnet, dass** die Datenverarbeitungseinrichtung (16) zur Durchführung eines Prognoseverfahrens eingerichtet ist, um den weiteren Verlauf von Schäden an Teilen oder Bereichen im Inneren der untersuchten Gasturbine (11) zu prognostizieren.

11. Verfahren zum Untersuchen von Gasturbinen (11) mit einem Endoskopiesystem (10) nach einem der vorangehenden Ansprüche, **dadurch gekennzeichnet, dass** das Endoskop (12) des Endoskopiesystems (10) in das Innere einer Gasturbine (11) eingebracht wird, das Endoskop (12) des Endoskopiesystems (10) durch die Datenverarbeitungseinrichtung (16) definiert im Inneren der Gasturbine (11) positioniert und ausgerichtet wird, und Bildaufnahmen (20,21,22) von Teilen oder Bereichen der Gasturbine (11) durch die Bildaufnahmeeinrichtung (13) erstellt werden.

12. Verfahren nach Anspruch 11, **dadurch gekennzeichnet, dass** die Position und/oder der Ausrichtung des Endoskops (12) in der Gasturbine (11) insbesondere mittels Bildverarbeitung der Bildaufnahmen (20, 21, 22) automatisch ermittelt wird.

## Claims

1. Endoscopy system (10) for examining gas turbines (11), comprising an endoscope (12) and a data processing device (16), the endoscope (12) comprising an image recording device (13), the endoscope (12) being configured to transmit image recordings (20, 21, 22) from the image recording device (13) from inside the gas turbine (11) to the data processing device (16), wherein the endoscopy system (10) is configured to position and orient the endoscope (12) in a gas turbine (11) in a defined manner, which endoscope is inserted into the gas turbine (11) and comprises the image recording device (13), wherein the endoscopy system (10) comprises an electronically controlled positioning apparatus (14) for positioning and/or orienting the endoscope (12) in the gas turbine (11) in a defined manner, **characterised in that**
- a rotary apparatus (15) for rotating at least one shaft of the gas turbine (11) is controllable by the data processing device (16), wherein
- the endoscopy system (10) is configured to automatically determine the position and/or orientation of the endoscope (12) in the gas turbine (11) by image processing the image recordings (20, 21, 22), wherein
- the positioning apparatus (14) is configured to then use the determined position data to position and orient the endoscope (12), wherein
- the endoscopy system (10) is configured to automatically determine the rotational position or the angle of rotation of a shaft (17) of the gas turbine (11), wherein this is carried out by the image recording device (13) and suitable image processing in the data processing device (16), wherein the absolute rotational position of the shaft (17) is determined on the basis of a marker, wherein the blade lock (19) is detected as a marker by image processing, wherein
- the endoscopy system (10) is configured to automatically assign parts of the gas turbine (11) to image recordings (20, 21, 22) of the image recording device (13), wherein this takes place by automatic image recognition by the data processing device (16) of at least one marker, wherein the blade lock (19) is used as a marker.

2. Endoscopy system (10) according to any of the preceding claims, **characterised in that** position-defining means are provided between the endoscope (12) and the gas turbine (11).

3. Endoscopy system (10) according to any of the preceding claims, **characterised in that** the endoscopy system (10) is configured to automatically capture images.

4. Endoscopy system (10) according to claim 3, **characterised in that** the endoscopy system (10) is configured to execute image recordings (20, 21, 22) in accordance with the rotational position of at least one shaft of the gas turbine (11).

5. Endoscopy system (10) according to claim 3 or 4, **characterised in that** the endoscopy system (10) is configured to capture images in synchronisation with the rotational movement of at least one shaft (17) of the gas turbine (11).

6. Endoscopy system (10) according to any of the preceding claims, **characterised in that** the endoscopy system (10) is configured to automatically store or archive image recordings (20, 21, 22) by the data processing device (16).

7. Endoscopy system (10) according to any of the preceding claims, **characterised in that** the data processing device (16) is configured to compare image recordings (20, 21, 22) with reference image recordings and/or with archived image recordings.

8. Endoscopy system (10) according to any of the preceding claims, **characterised in that** the data processing device (16) is configured to automatically identify deviations from the desired state and/or damage to parts or regions of the gas turbine (11) being examined.

9. Endoscopy system (10) according to any of the preceding claims, **characterised in that** the data processing device (16) is configured to gauge and/or classify and/or track the progression of damage to parts or regions inside a gas turbine (11).

10. Endoscopy system (10) according to any of the preceding claims, **characterised in that** the data processing device (16) is configured to carry out a forecasting procedure in order to forecast the further progression of damage to parts or regions inside the gas turbine (11) being examined.

11. Method for examining gas turbines (11) using an endoscopy system (10) according to any of the preceding claims, **characterised in that** the endoscope (12) of the endoscopy system (10) is inserted into the inside of a gas turbine (11), the endoscope (12) of the endoscopy system (10) is positioned and oriented in a defined manner inside the gas turbine (11) by the data processing device (16) and image recordings (20, 21, 22) of parts or regions of the gas turbine (11) are produced by the image recording device (13).

12. Method according to claim 11, **characterised in that** the position and/or orientation of the endoscope (12) in the gas turbine (11) is determined automatically, more particularly by processing the image recordings (20, 21, 22).

## Revendications

1. Système endoscopique (10) pour l'inspection de turbines à gaz (11), comportant un endoscope (12) et un moyen de traitement de données (16), l'endoscope (12) comprenant un moyen de capture d'images (13), l'endoscope (12) étant adapté pour transmettre des captures d'images (20, 21, 22) du moyen de capture d'images (13) de l'intérieur de la turbine à gaz (11) au moyen de traitement de données (16), le système endoscopique (10) étant adapté pour positionner et orienter de manière définie dans une turbine à gaz (11) l'endoscope (12) avec le moyen de capture d'images (13) introduit dans la turbine à gaz (11), le système endoscopique (10) présentant un dispositif de positionnement (14) à commande électronique pour le positionnement et/ou l'orientation définis de l'endoscope (12) dans la turbine à gaz (11), **caractérisé en ce que**
- un dispositif de rotation (15) pour faire tourner au moins un arbre de la turbine à gaz (11) peut être commandé par le moyen de traitement de données (16), dans lequel
- le système endoscopique (10) est adapté pour déterminer automatiquement la position et/ou l'orientation de l'endoscope (12) dans la turbine à gaz (11) au moyen d'un traitement d'images de la capture d'images (20, 21, 22), dans lequel
- le dispositif de positionnement (14) est adapté pour utiliser ensuite les données de position déterminées pour positionner et orienter l'endoscope (12), dans lequel
- le système endoscopique (10) est adapté pour déterminer automatiquement la position de rotation ou l'angle de rotation d'un arbre (17) de la turbine à gaz (11), ceci étant réalisé par le moyen de capture d'images (13) et un traitement d'images approprié dans le moyen de traitement de données (16), la position de rotation absolue de l'arbre (17) étant déterminée à l'aide d'un repère, un verrou d'aube (19) étant détecté en tant que repère par le traitement d'images, dans lequel
- le système endoscopique (10) est adapté pour effectuer une association automatique de parties de la turbine à gaz (11) à des captures d'images (20, 21, 22) du moyen de capture d'images (13), ceci étant réalisé par une reconnaissance automatique d'images par le moyen de traitement de données (16) dudit au moins un repère, le verrou d'aube (19) étant utilisé comme repère.

2. Système endoscopique (10) selon l'une des revendications précédentes, **caractérisé en ce que** des moyens de définition de position sont prévus entre l'endoscope (12) et la turbine à gaz (11).

3. Système endoscopique (10) selon l'une des revendications précédentes, **caractérisé en ce que** le système endoscopique (10) est adapté pour une capture automatique d'images.

4. Système endoscopique (10) selon la revendication 3, **caractérisé en ce que** le système endoscopique (10) est adapté pour effectuer des captures d'images (20, 21, 22) en fonction de la position de rotation d'au moins un arbre de la turbine à gaz (11).

5. Système endoscopique (10) selon la revendication 3 ou 4, **caractérisé en ce que** le système endoscopique (10) est adapté pour capturer des images de façon synchronisée avec le mouvement de rotation d'au moins un arbre (17) de la turbine à gaz (11).

6. Système endoscopique (10) selon l'une des revendications précédentes, **caractérisé en ce que** le système endoscopique (10) est adapté pour stocker ou archiver automatiquement des captures d'images (20, 21, 22) par le moyen de traitement de données (16).

7. Système endoscopique (10) selon l'une des revendications précédentes, **caractérisé en ce que** le moyen de traitement de données (16) est adapté pour comparer des captures d'images (20, 21, 22) avec des captures d'images de référence et/ou avec des captures d'images archivées.

8. Système endoscopique (10) selon l'une des revendications précédentes, **caractérisé en ce que** le moyen de traitement de données (16) est adapté pour détecter automatiquement des écarts par rapport à l'état de consigne et/ou des dommages sur des parties ou des zones de la turbine à gaz (11) inspectée.

9. Système endoscopique (10) selon l'une des revendications précédentes, **caractérisé en ce que** le moyen de traitement de données (16) est adapté pour effectuer une mesure et/ou une classification et/ou un suivi de l'évolution de dommages sur des parties ou des zones à l'intérieur d'une turbine à gaz (11).

10. Système endoscopique (10) selon l'une des revendications précédentes, **caractérisé en ce que** le moyen de traitement de données (16) est adapté pour exécuter un procédé de prédiction pour prédire l'évolution ultérieure de dommages sur des parties ou des zones à l'intérieur de la turbine à gaz (11) inspectée.

11. Procédé d'inspection de turbines à gaz (11) avec un système endoscopique (10) selon l'une des revendications précédentes, **caractérisé en ce que** l'endoscope (12) du système endoscopique (10) est introduit à l'intérieur d'une turbine à gaz (11), l'endoscope (12) du système endoscopique (10) est positionné et orienté de manière définie à l'intérieur de la turbine à gaz (11) par le moyen de traitement de données (16) et des captures d'images (20, 21, 22) de parties ou de zones de la turbine à gaz (11) sont réalisées par le moyen de capture d'images (13).

12. Procédé selon la revendication 11, **caractérisé en ce que** la position et/ou l'orientation de l'endoscope (12) dans la turbine à gaz (11) sont déterminées automatiquement, en particulier au moyen d'un traitement d'images des captures d'images (20, 21, 22).
